# EUROPEAN PATENT APPLICATION

(11) **EP 1 897 675 A1**
(43) Date of publication of application: **12.03.2008**
(21) Application number: 07116014.7
(22) Date of filing: 10.09.2007
(51) Int. Cl.: B29C 49/06, B65D 1/02

(54) **Injection stretch blow-molded container**

(30) Priority: 11.09.2006 EP 06120429
(71) Applicant: The Procter and Gamble Company, Cincinnati, Ohio 45202 (US)
(72) Inventor: Mangin, Raphael Louis, 100027 Beijng (CN)
(74) Representative: Mather, Peter Geoffrey

(57) **Abstract**

The present invention relates to an injection stretch blow-molded transparent container, consisting essentially of bi-oriented polypropylene, which is filed with a gas-releasing liquid composition. The present invention also relates to the use of such container in view of containing gas-releasing liquid composition.

## Description

### FIELD OF THE INVENTION

The present invention relates to an injection stretch blow-molded container, made of bi-oriented polypropylene, filed with a liquid formulation releasing gas

### BACKGROUND OF THE INVENTION

Containers, and more specifically bottles, are widely used in the consumer goods industry for packaging various types of fluid products, such as drinks, foodstuffs, laundry and household cleaning products, shampoo and other personal care products.
Thermoplastic materials are mostly used for producing these containers. Typical thermoplastic material used for producing containers and bottles include polyvinylchloride (PVC), Polyethylene terephthalate (PET), polypropylene (PP), Low or High density polyethylene (LDPE or HDPE) and polystyrene (PS).

Such containers, and more specifically bottles, are required to have a certain properties. Indeed, such containers need to have very good mechanical strength to prevent, for example, damage during transport and/or during use; and these containers must have, at the same time, a weight and a wall thickness as low as possible. In addition, such containers are also required to provide a high level of aesthetic appeal to consumers. Therefore, transparent and/or glossy containers are often consumer preferable and are, most of the time, a requirement.

Moreover, such containers have to overcome other problems such as problems linked with the nature of the product packed herein, such as for example, the blow-up and/or the bulging of the containers.
This "blow up" problem appears especially when the container contains a liquid which release gas over time. This problem appears, most of the time, when the container is filled with liquid, such as laundry additives formulations, which contain hydrogen peroxide (H₂O₂) or other gas-releasing compounds (such as hypochlorite bleach). The blow up of the containers can appear even if there is low concentration of H₂O₂, i.e. less than 10% for example.
Indeed, the hydrogen peroxide, and other gas-releasing compound, are not completely stable in the formulation and, most of the time, part of it will be degraded over time into water (H₂O) and oxygen (O₂). As a consequence, the O₂ will accumulate in the container/bottle headspace and, if this gas is not released from the container, can cause a high pressure in the container which may lead to container bulging or even bursting.

Therefore, there is a need for a container, having good mechanical properties and, at the same time, which provides aesthetic appeal to consumers, i.e. transparency, which is able of not bulging when said container contains liquid formulation releasing gas.

Several attempts were made to solve this problem: Specific caps, which allow the release of gas, i.e. venting cap, have been used as container closures. However, these caps have the disadvantage of being very expensive to produce. Specific thermoplastic material for producing bottles, such as for example HDPE, has also been used. However, the bottles made of HDPE have the inconvenience of not having a great aesthetic appeal to consumers as these bottles are not transparent.

The applicant has now found that a container which has, at the same time, good mechanical properties (good mechanical strength, low weight and walls thickness) aesthetic appeal to consumers, i.e. transparency, and which does not show any bulging up problem when said container contains liquid formulation releasing gas, can be provided by using a specific material as described below for making that container.

More especially, it has been found that containers consisting essentially of bioriented polypropylene (BoPP), made via a specific process, i.e., the Injection Stretch Blow-Molding (ISBM) process, fulfils these requirements.
Indeed, it has been found that such containers have some permeability to gas. Therefore, these containers are able to contain liquid gas releasing formulations without having any bulging problem, as they are able to release gas over the time.
Moreover, it has been found that that injection stretch blow-molded containers, made from BoPP, have aesthetic appeal to consumers and more especially, that it allows to pack the liquid in fully transparent container. Indeed, containers made via such a process are much clearer and glossy than container made with an extrusion process.

Even more, it has been found that that injection stretch blow-molded container, made from BoPP, have surprising good mechanical performance whilst not being made with a large amount of material. Indeed, these containers have, at the same time, a low weight and low wall thickness. The lower quantity of material used to produce the containers is therefore not prejudicial towards physical resistance. On the contrary, another advantage of the present invention is that these containers have good mechanical performance and good mechanical strength.
As a matter of fact, the injection stretch blow-molded containers, made from BoPP, have an unexpected physical resistance, i.e., an important mechanical resistance, especially by comparison with container made of extruded PP. Such resistances is unexpected due to the lower weight and lower wall thickness of the injection stretch blow-molded containers, made from BoPP.
Moreover, another advantage of the injection stretch blow-molded container, made from BoPP, is that the container produced herein is resistant to aggressive formulation, more especially, resistant to oxidant formulations.

Hence, another advantage of the present invention is that is that the quantity of material used to produced the injection stretch blow-molded containers, made from BoPP, is reduced, by comparison of a container made by other thermoplastic materials (such as for example made by extruded PP or HDPE). Indeed, the injection stretch blow-molded containers, made from BoPP, have a lower weight and lower wall thickness by comparison with containers made with conventional method such as Extruded PP or HDPE (i.e. the minimum wall thickness that can be up to 60% thinner than the Extruded PP or HDPE).

Additionally, another advantage to the present invention is that the injection stretch blow-molded containers, made from BoPP, allow the inclusion of handles in that container.

Polypropylene (PP) is known in the art as a suitable material from which to manufacture transparent containers. Conventionally, an extrusion blow-molding process has been used, but such a process results in bottles not having a good appearance, i.e., with low transparency, and having low impact strength. Consequently these containers have been little used in practice for packaging consumer goods.
High transparency, glossy containers are commonly made from polyethylene tetraphthalate (PET), and most commonly manufactured in an injection stretch blow-molding process. But containers made from PET have the disadvantage of not being permeable to gas (especially to O₂). EP-A-0 346 518, published on 20th December 1989, discloses an injection stretch blow molding process for the production of bottles.

### SUMMARY OF THE INVENTION

The present invention relates to an injection stretch blow-molded transparent container, consisting essentially of bi-oriented polypropylene, containing a gas-releasing liquid composition. The present invention also relates to the use of such containers in view of containing gas-releasing liquid compositions.

### DETAILED DESCRIPTION OF THE INVENTION

In a first aspect, the present invention encompasses an injection stretch blow-molded (ISBM) transparent container, consisting essentially of bi-oriented polypropylene (BoPP), filled with a liquid formulation releasing gas.

Containers, according to the present invention, have the advantage of being able to contain liquid gas releasing formulations without bulging, as they are able to release gas, which is produced over the time. Therefore, these containers do not need to have any venting-cap; the release of the gas is due to the specific permeability property of the thermoplastic material used for producing such containers.
Another advantage of injection stretch blow-molding for polypropylene container, according to the present invention, is the excellent clarity and gloss property. Moreover, the container, according to the present invention, has good mechanical performance, i.e. high impact strength.

Any composition which release gas is suitable for use in the present invention. The formulation can be, for example, laundry additives formulations or household cleaning formulations. Such formulation may contain classical elements that are commonly found in such kind of formulation, such as water, surfactants, builders, dyes, radical scavengers, polymers, etc...
In a preferred embodiment of the present invention, the gas-releasing liquid composition contained in the container, is a laundry additive formulation. In a more preferred embodiment, the liquid formulation releasing gas contains hydrogen peroxide or other gas-releasing compound (such as hypochlorite bleach), more preferably it contains hydrogen peroxide (H₂O₂).

The gas released from the gas-releasing liquid composition, contained in the container, can be any gas. Preferably, the gas which is released from the liquid is O₂, CO₂, N₂, ClO₂ or other gas. More preferably, the composition will release oxygen (O₂).
The permeability of the container for H₂O is also acceptable according to the present invention (i.e., it releases an insignificant amount of water especially by comparison to the other bottle material such as PET, HDPE...).

The term "gas release" is defined as the liberation of the gas through parts or even the entire wall of the container. The gas, which is released, has as an origin the liquid formulation packed in the container which is not totally stable.
An example of a gas-releasing liquid composition, packed in the container according to the present invention, is a laundry additive formulation.
The hydrogen peroxide (H₂O₂), present in the liquid laundry additive formulation, degrades over time into water (H₂O) and oxygen (O₂), and will release O₂ in a gas form. This gaseous O₂ is released through the wall of the container, without causing any bulging problem. The gas liberation is possible due to the permeability's property of the injection stretch blow-molded (ISBM) transparent container, consisting essentially of bi-oriented polypropylene (BoPP).

In a preferred embodiment, according to the present invention, the injection stretch blow-molded (ISBM) container, consisting essentially of bi-oriented polypropylene (BoPP), is a bottle. In a more preferred embodiment, the injection stretch blow-molded (ISBM) container, consisting essentially of bi-oriented polypropylene (BoPP), is a transparent bottle.

As used herein, the term "transparent" indicates a container which exhibits good clarity and, thus, which has the property of allowing light to pass through. Therefore, transparent container can be clearly seen through.
Therefore a transparent container is different from a translucent container. A translucent container is a container which only allows some light to pass through (diffusely), thus it can not be clearly seen through.

As used herein, the term "stretch blow molded container" means a container made by the injection stretch blow-molded process described below.
An essential feature of the present invention is that the injection stretch blow-molded container consists essentially of bi-oriented polypropylene. By "bi-oriented polypropylene" it is meant herein a polypropylene which, after the molding process, becomes bi-oriented. One of the preferred process which lead to "bi-oriented polypropylene" is the injection stretch blow-molding process.

By "consisting essentially of bi-oriented polypropylene", it is meant herein that the resin used to make the container contains more than 90%, even more, more than 95% of bi-oriented polypropylene. The remaining percentage is selected from the group consisting of additives, such as, for example, UV filters, dye or processing agents.

By "preform" it is meant herein is a molded form which is produced prior to expansion to form the finished object. A preform is necessarily somewhat smaller than the finished object. A preform is generally produced by, for example injection molding, at an elevated temperature in excess of the melt temperature. More particularly, it is meant herein an molded part of plastic that is formed with the neck finish.

A "mold" as described herein generally comprises two or more parts which can be closed to form a "mold cavity", and opened in order to allow a preform to be inserted into the mold and/or the blown product to be removed from the mold. In commercial operations multiple mold cavities may be combined in a continuous, high-speed machine.

In a preferred embodiment, the container such as defined in the present invention will contain dye and/or UV filters, preferably UV filters.
In a preferred embodiment, the dye and/or UV filters will be present, in a amount comprised between 0.001 % and 10 %, preferably from 0.1 to 5 %, more preferably from 0.5 to 2 % of the total weight of the resin used to make the container.

Thus, the present invention also encompass transparent container, consisting essentially of bi-oriented polypropylene, containing a gas-releasing liquid composition, which also contains dye and/or UV filters, preferably UV filters.
Indeed, a transparent container, such as defined herein, containing UV filters, will protect the liquid contained herein from UV light. Therefore, this transparent container containing UV filters will prevent the liquid from decomposition, i.e. from releasing gas.

In a more preferred embodiment, the dye and/or UV filters will be specifically formulated for "bi-oriented polypropylene".
Colorants and/or UV filters, present in the resin used to make the container according to the present invention, contain ingredients that are mixed in a polymer carrier matrix, forming thus a "masterbatch". The polymer carrier matrix helps incorporate colorants and/or UV filters in the blow molding process.
In a more preferred embodiment, colorants and/or UV filters, present in the resin used to make the container according to the present invention, are formulated in a polypropylene carrier matrix. As an example, the ingredient used the in container according to the present invention will be "CC10082871BG^{®}" available form Polyone.

Preferably, the container such as defined in the present invention, will be obtained by process using preforms of polypropylene (PP).
Polypropylene is readily available in commercial grades. Materials having suitable combinations of melt strength, re-heat properties, transparency and processing window size are available from suppliers such as Borealis, BP, and Total, e.g. Total's PPR7225.
The most common process for the production of preforms is injection moulding. This process is referred herein to as "injection stretch blow moulding" or "ISBM".
Utilizing ISBM for polypropylene results in containers of greatly improved stiffness, drop strength, compression strength, gloss and transparency compared to extrusion blow molded containers of the same material.

By "stretch blow-molding" it is meant herein a process in which the preform is first stretched longitudinally, generally by means of a stretch pin or plunger, followed by a blowing step at a temperature above the glass transition temperature, designed to result in retained orientation in the blow direction so that the resulting configuration is "biaxially oriented".
The appropriate stretch temperature for a polypropylene is between about 140°C and 150°C.

The "injection stretch blow molding" or "ISBM" process refers herein more generally to a process wherein the container is formed in two independent steps: the first step is the injection of a preform, the second step is the blowing of the said preform into the final container shape. The preform can be also blown right after the injection on the same machine (one step ISBM). Alternatively, The preform can be cooled down, stored and reheated later before blowing (two steps ISBM). Several variation of the one step process are possible such as an extra heating of the preform before blowing and all are compatible with the invention. All process described herein include a stretching of the preform during the blowing step, achieved, for example, by a stretch rod that enters into the preform to elongate it.

For commercially useful executions, the blow-molded container will typically be decorated, for example by means of a label or sleeve.
The label or the sleeve technology used in the present invention can be of any well know type, and include such has an example, self adhesive, wet glue, shrink sleeve, stretch sleeve, heat transfer, in mold labeling, wrap-around, roll-on shrink-on, silk-screen and the like.
Examples of labels are, preferably, wrap-around, wet-glue, and in-mold labels. Examples of sleeves are, preferably, stretch sleeves and shrink sleeves.
It is preferred that the label or sleeve comprises a film substrate which is made from a transparent material. This enables decoration, i.e. brand name, logo, images, and the like; ingredient information; usage instructions; bar code; hologram etc., to be displayed for the consumer, whilst still preserving the aesthetic benefits of the transparent container. Such decoration is printed onto the film substrate by any of various techniques known in the packaging art.

Containers are also generally required to have some form of closure mechanism to enclose and protect the contents and to facilitate extraction, dosing and application. These closures take a wide range of formats, are most commonly made from polyolefins, preferably polypropylene. Many containers also have an additional item, such as a dosing ball to further facilitate the use of the product. These items are also commonly made from polyolefins, preferably polypropylene (PP), Low or High density polyethylene (LDPE or HDPE), or polyestertetraphtalate (PET). The permeability of these caps has no importance in view of the permeability of the bottle.

In many cases it is preferable for the blow-molded container to be capped with a self draining closure. Self draining containers are known in the art. These containers include means for returning contents which have dripped or run down the exterior of the pouring spout to the main body of the container. Examples of prior art self draining closures are shown in United States Patent No. 4,550,864 and United States Patent No. 4,640,855. Self draining closures are particularly advantageous for highly viscous products that adhere to and drip down the outer surface of a bottle, and for low surface-tension products which will also adhere to the bottle. Prime examples of these products are detergents, which are both viscous and low surface-tension, and have repeat uses from the same container resulting in significant mess. Self-draining closures are often made in more than one piece to facilitate molding and attachment to the bottle, and will usually have a separate cap section.
In a particularly advantageous embodiment of the invention, the closure is an integral part of the container. This can be achieved by injection stretch blow molding the container from a preform, wherein the preform neck comprises a closure so that the blown container is a one piece container comprising integral closure. Most preferably the integral closure is a self-draining spout so that the finished package is a one piece self-draining container as disclosed in United States Patent No. 5,114,659.
One-piece caps with or without living hinges are also an effective method of closure for a container. These closures have a nozzle section and a cap section which is attached by a thin section of the same part. This joint is often made into a living hinge which forces the cap to flip back or to the nozzle from the other position when a small force is applied. These closures are low-cost to produce as they consist of just one piece, and are particularly advantageous for use on products that require one-handed use, such as shampoos and dish detergents. Closures such as this are known in the art.
In addition to simple caps, it is often preferable for package and closure systems to incorporate further items to improve functionality through dosing control, product application direction, or many other common requirements for consumer and professional products. Common examples of these systems can include, but are not limited to, non-return valves, slit-seal valves, dosing chambers, directional and 'pop' spouts, rollerballs and pump devices.

The present invention will be further illustrated by the following examples.

### Example 1

A permeability to Oxygen measurement has been performed on two containers made with two different thermoplastic materials and via two different processes.

| | | |
|---|---|---|
| **Size** | 1 liter Bottle | 1 liter Bottle |
| **Resin** | HDPE | BoPP |
| **Process** | Extrusion Blow Molding Process | Injection Stretch Blow Molding Process |
| **Plastic Weight** | 55 gr | 45gr |
| **Minimum Wall thickness** | 0.4mm | 0.25mm |
| **Aspect** | Translucent | Transparent |
| **O₂ permeability** (cc/pack/24h/0.2 atm - RH 50%-23°C) | 0.97438 | 1.442 |

### Example 2

A permeability to gas measurement has been performed on different thermoplastic materials.

| **Permeability** | **PET** | **HDPE** | **PP** | **BoPP** |
|---|---|---|---|---|
| **O₂** (cc/100in²/mil/day/atm) | 5 | 185 | 190 | 80 |
| **CO₂** (cc/100in²/mil/day/atm) | 15 | 580 | 650 | 130 |
| **N₂** (cc/100in²/mil/day/atm) | 0.8 | 42 | 44 | 20 |
| **H₂O** (g.µm/ m².24h) | 800 | 50-200 | 250 | 125 |

### Example 3

A "Drop test" measurement has been performed on the 1 liter BoPP bottle such as defined in example 1 and on the same bottle made with PP extrusion (Equipment Specification: ISO 2248; Test Method: ASTM D 2463-95).
- Bottles are conditioned for at least 24 hours at the target temperature with the appropriate product inside.
- 20 Bottles are dropped one another one, one time for each temperature conditions, from a height of 1.2meter.
- The number of bottles failing is recorded. Failure means leakage due to cracks in the plastic. The deformation of the bottle and notches are not considered as failures.

| **Conditions of the Drop Test** | **PP extrusion Translucent 1 L. Bottle** | **BOPP ISBM Transparent 1 L. Bottle** |
|---|---|---|
| 20°C | 2.9% failures | 0% Failure |
| -4°C | 100% Failure | 0% Failure |
| -15°C | 100% Failure | 5.3% Failure |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. An injection stretch blow-molded transparent container, consisting essentially of bi-oriented polypropylene, containing a gas-releasing liquid composition.

2. An injection stretch blow-molded container according to claim 1 wherein the liquid composition comprises hydrogen peroxide.

3. An injection stretch blow-molded container according to any of the preceding claims wherein the liquid composition releases oxygen.

4. An injection stretch blow-molded container according to any of the preceding claims wherein the liquid gas-releasing liquid composition is a laundry additives formulation.

5. An injection stretch blow-molded container according to any of the preceding claims wherein the container further comprises dye and/or UV filters, preferably UV filters.

6. An injection stretch blow-molded container according to claim 5 wherein the dye and/or UV filters are formulated in a polypropylene carrier matrix.

7. An injection stretch blow-molded container according to any of the preceding claims wherein the container is provided with a decoration comprising labels or sleeves.

8. An injection stretch blow-molded container according to claim 7, wherein the label or sleeve comprises a film substrate upon which the decoration is printed.

9. A finished product package comprising a container according to any of claims 1 to 8, wherein the finished product package further comprises a closure.

10. Use of the injection stretch blow-molded container consisting essentially of bi-oriented polypropylene as packaging for a gas-releasing liquid composition.

11. Use of the injection stretch blow-molded container consisting essentially of bi-oriented polypropylene as packaging for laundry additives formulations.

12. Use of the injection stretch blow-molded container consisting essentially of bi-oriented polypropylene as packaging for liquids which contain hydrogen peroxide.
